# FASCICULE DE BREVET EUROPEEN

(11) **EP 1 690 661 B1**
(45) Date de publication et mention de la délivrance du brevet: **16.01.2008**
(21) Numéro de dépôt: 06290229.1
(22) Date de dépôt: 09.02.2006
(51) Int. Cl.: B29B 17/02

(54) **Procédé de recyclage de disques optiques et de leur conditionnement**
Recyclingverfahren von optischen Scheiben und deren Verpackung
Recycling process of optical disks and the packages thereof

(30) Priorité: 09.02.2005 FR 0501311
(43) Date de publication de la demande: 16.08.2006
(73) Titulaire: Compagnie Européenne des Matières Plastiques Industrielles, 54110 Dombasle sur Meurthe (FR)
(72) Inventeur: Maubert, Alain, 75116 Paris (FR)
(74) Mandataire: Bredema

(56) Documents cités:
- WO-A-03/024603
- FR-A- 2 751 262
- US-A1- 2003 131 688
- US-B1- 6 752 336

## Description

La présente invention se rapporte au domaine du recyclage des déchets de type CD et DVD invendus et retournés aux éditeurs.

La présente invention concerne plus particulièrement un procédé et un dispositif de traitement de ces déchets composés en partie de papier (emballage, livret) et de matières plastiques ou polymères (disque, boîte) pour produire des granulés de polystyrène cristal à haut degré de pureté ou d'autres granulés de recyclage (polycarbonate, par exemple).

Tous les jours, les produits invendus, du type disques compacts (CD) ou DVD, sont retournés par les surfaces de vente aux éditeurs. Ces derniers se doivent de les rendre illisibles eut égard aux redevances que pourrait demander l'organisme national de gestion des droits d'auteur. Plus de 3000 tonnes de CD-DVD bruts avec emballages sont ainsi retournées chaque année.
En parallèle, grâce aux procédés de recyclage, les disques optiques et leur conditionnement constituent une source de matières premières dans l'élaboration de granulés utilisés dans la fabrication de nouvelles pièces plastiques pour les marchés de l'automobile, de l'ameublement, de l'emballage, ... La principale difficulté pour le recyclage des CD et DVD en retour des éditeurs est la séparation des différents composants : papiers, plastiques Polystyrène (boîtiers CD et DVD) et Polycarbonate (galette CD et DVD), ainsi que l'aluminium qui recouvre le CD et le DVD, dans un unique processus automatisé.

La présente invention s'inscrit parfaitement dans ce cadre, à savoir, le recyclage des matières plastiques et l'assurance de disposer d'une solution efficace au regard de la destruction des informations contenues par les supports optiques.

Il existe, dans l'art antérieur, des procédés de recyclage de disques optiques par pelage ou abrasion de la couche d'aluminium (W00219326, EP1040900, W00058957, US6500511) qui sont des solutions économiquement concurrentes de la présente invention.

L'art antérieur connaît également des procédés de recyclage de disques optiques par voie humide, en référence aux documents JP04360035, US6435249 et EP1273414. Ces procédés mettent en oeuvre des solutions aqueuses coûteuses utilisant des composés chimiques complexes, et ne sont pas adaptés au traitement des disques optiques munis de leur conditionnement.

On connaît également, par la demande de brevet PCT WO 03/024603, un procédé permettant de récupérer de la matière plastique à partir d'une combinaison d'au moins un support de stockage optique, tel qu'un CD ou un DVD, et au moins un contenant de stockage conçu pour maintenir ce support de stockage optique. Le procédé mis en oeuvre se base sur l'utilisation d'un flux gazeux pour séparer les emballages non plastiques des matières plastiques, ce qui n'est pas la voie suivie par la présente invention.

L'art antérieur connaît, par le brevet européen EP 918606, un procédé de tri de matériaux polymère (PET, PS...) consistant à broyer les produits initiaux, puis à effectuer un tri mécanique, deux tris par densité et un nettoyage. Optionnellement, une étape de tri optique permet d'affiner la séparation des matériaux.
L'art antérieur connaît également, par la demande de brevet PCT WO 02/04185, un procédé de tri d'éléments plastiques consistant à sélectionner par des moyens opto-mécaniques les éléments plastiques satisfaisants à des critères, par exemple sur la transparence.

On connaît également, par la demande de brevet PCT WO 04/04997, un procédé de tri de déchets issus de l'industrie automobile ou informatique ou autres afin de constituer un ensemble de polymères hautement concentrés pour valorisation. Ce procédé consiste, successivement, à trier les déchets par criblage, par flux gazeux, à broyer les déchets et à les retrier par flux gazeux.

Par ailleurs, il est connu du document FR 2 761 252 un procédé et une installation pour séparer des matériaux polymères par densité.

Il est également connu du document US 6 752 336 une méthode de recyclage de tapis par réduction en fibres, suspension dans un bain liquide et séparation dans une centrifugeuse.

L'art antérieur connaît également, par la demande de brevet PCT WO 03/86733, un procédé de tri des plastiques mettant en oeuvre notamment des prétraitements (broyage), des tris par densité, par taille, par couleurs (tri optique).

Ces solutions concernent le tri de déchets soit uniquement plastiques soit mélangés de type déchets usagers. Elles ne sont pas adaptées au cas spécifique des CD-DVD qui peuvent être munis de leur conditionnement en vue de produire des granulés plastiques.

La présente invention vise à recycler des disques optiques munis de leur conditionnement afin de produire des granulés de plastiques, par exemple du polystyrène cristal, à haut degré de pureté.

La présente invention entend remédier aux inconvénients de l'art antérieur en proposant un procédé de traitement de déchets de type CD-DVD avec ou sans leur conditionnement apte à rendre illisibles les données imprimées sur le support optique et pour produire des granules de polymères à haut degré de pureté.
La présente invention permet ainsi, à partir des CD-DVD emballés ou non, de séparer la phase papier/carton des phases plastiques, elles-mêmes divisées en une phase plastique « pure » pour la fabrication des granulés et une phase plastique « mélangée ».

L'objet de la présente invention est également de fournir une ligne de traitement pour la mise en oeuvre du procédé.

A cet effet, l'invention concerne dans son acception la plus générale un procédé de traitement de déchets hétérogènes composés de disques optiques et de leur conditionnement pour produire des granules de polymères à haut degré de pureté, notamment des granules de polystyrène (PS) cristal. Le procédé comprend, successivement, :
- une étape de broyage desdits déchets ;
- une étape de séparation par tri densimétrique des déchets broyés visant à séparer les phases papier/carton, plastique et poussière ;
- une étape de séparation par tri densimétrique en solution saline de ladite phase plastique visant à la séparer en au moins une phase de polymères à haute densité et une à basse densité ;
- une étape d'extrusion en granules à haut degré de pureté d'au moins une desdites phases triées.

Dans une mise en oeuvre, le broyage a une granulométrie fine comprise entre 8 et 30 mm, par exemple 14 mm et ledit procédé comprend, en outre, une étape de dépoussiérage successivement à l'étape de broyage.
Notamment, la solution saline est une solution de chlorure de sodium (NaCl). La densité de la solution saline est adaptée en fonction des éléments plastiques à séparer, à savoir une densité comprise entre 1,05 et 1,10, par exemple 1,08, pour la séparation du polystyrène avec le polycarbonate, densité comprise entre 1,22 et 1,28, par exemple 1,26, pour séparer le polycarbonate du PET (Polyéthylène Téréphtalate), densité comprise entre 0,95 et 1,10, par exemple 1,02, pour séparer polycarbonate et polypropylène.

En particulier, ladite étape de séparation consiste en une étape de tri densimétrique par table vibrante et une étape de tamisage fin visant à récupérer les fines de plastique. Le tamisage fin a une granulométrie de 1 mm.

Spécifiquement, ledit procédé comprend, en outre, une étape de tri optique d'au moins une des phases issues de ladite étape de tri par solution saline. Cela permet notamment d'assurer une séparation rapide et optimale des morceaux de plastiques colorés et ceux transparents.
Dans un mode de réalisation particulier, ladite étape de tri optique est précédée d'une étape de criblage de la phase à trier optiquement en au moins deux flux de granulométrie différente, ladite étape de criblage étant réalisée par un tamis vibrant circulaire. Cette étape de criblage optimise le tri optique afin d'obtenir une plus grande quantité de polystyrène cristal trié.

Dans un mode de réalisation, le procédé comprend, en outre, une étape préalable de tri visant à nettoyer le flux de déchets de contaminants tels que les cassettes audio ou vidéo.

Particulièrement, ladite étape d'extrusion comprend une étape d'ajout d'additifs et de colorant éventuel afin d'obtenir des granulés de différents types.
On comprendra mieux l'invention à l'aide de la description, faite ci-après à titre purement explicatif,
d'un mode de réalisation de l'invention, en référence aux figures annexées :
- la figure 1 représente la ligne de traitements des CD-DVD et leur conditionnement selon la présente invention ;
- la figure 2 représente un ordinogramme du procédé de l'invention ; et
- la figure 3 illustre la structure de l'unité de séparation plastiques / papier / poussière de la ligne de traitement de la figure 1.

Par la suite, le terme « disques optiques » fait référence à tous les supports d'informations numériques sous forme de disque et dont la composition est proche de celle décrite ci-après. A titre d'exemple, les CD, DVD, vidéo-disques, en album, *single* ou coffret sont couverts par l'appellation de disque optique et de leur emballage.

Les CD/DVD et leur conditionnement sont composés de plusieurs matières dont :
- le papier ou le carton de certains emballages et des petits livrets contenant par exemple les paroles des chansons, ainsi que les étiquettes apposées par les vendeurs ;
- le film plastique qui recouvre la plupart du temps les CD/DVD en vente ;
- le plastique Polystyrène (PS) constitutif des boîtiers. Certains boîtiers sont transparents auquel cas, on parlera de PS cristal, d'autres sont opaques (gris anthracite) ;
- le plastique Polycarbonate (PC) constitutif de la galette du CD et du DVD ;
- l'aluminium déposé en fine couche sur la galette et qui sert de support au stockage des informations numériques.

Dans le cas du processus de recyclage des disques optiques et de leur conditionnement invendus, les CD/DVD emballés ou non (200) arrivent dans des caisses plombées (1) pour assurer un suivi exact des quantités en vue de remplir les bordereaux de la société de perception des droits d'auteur.

### Prétraitement : tri (202)

Les caisses (1) sont ouvertes et déversées, par l'intermédiaire d'un retourneur (10) sur un premier tapis plat (20), par exemple roulant. Un tri manuel visuel (202) peut être alors effectué afin de retirer tout contaminant (30) du flux d'objets ou tout type de CD non désiré. En effet, dans certains modes de réalisation de l'invention, le traitement des CD appelés *single* et celui des DVD peuvent être réalisés à part. On entend par contaminant, tout élément n'appartenant pas au groupe des disques optiques munis ou non de leur emballage. A titre d'exemple, les cassettes audio, vidéo présentes en faible quantité sont retirées de ce flux.
Une automatisation de cette étape peut être envisagée.
Le flux épuré est ensuite dirigé vers un broyeur par l'intermédiaire d'un tapis de montée (40).

### Broyage (204)

Les CD/DVD sont ensuite broyés (204) dans un broyeur (50) à granulométrie fine de 8 à 30 mm, par exemple 12 ou 14 mm.
Des broyeurs sont connus de l'art antérieur, par exemple des broyeurs électriques à lames circulaires. Ces systèmes sont dotés, en sortie, de filtres anti-poussières ou de modules dépoussiéreur (60) pour récupérer les poussières.
Les éléments broyés ainsi obtenus sont stockés dans un silo (100) prévu à cet effet. Les éléments broyés sont donc des « pastilles » de plastique, carton, papier d'une taille limitée (14 mm pour un broyeur de cette granulométrie).

Le transfert des éléments broyés depuis le broyeur (50) jusqu'au silo (100) peut être réalisé au moyen d'une ventilation appropriée (non représentée). Le système peut contenir des compresseurs ou une ventilation associée à des moteurs électriques, fournissant un flux d'air qui transporte lesdits éléments broyés.
Une alternative envisage l'utilisation d'un fluide compressé, par exemple de l'eau, pour transporter les éléments broyés. Ces derniers sont alors nettoyés et transmis à un séchoir (non représenté) qui alimente le silo (100).

Les éléments broyés peuvent être stockés de façon prolongée dans le silo (100) ou transférés pour la suite du processus de recyclage.

Cette étape de broyage permet de rendre illisible les données numériques contenues sur le support disque optique. Ainsi le procédé convient aux exigences de la société de perception des droits d'auteur quant à la destruction des données.

### Ensemble de séparation plastique / papier / poussière (110)

Les éléments de papier-carton-plastique broyés sont convoyés vers l'ensemble de séparation (110) des phases papier/carton, plastique et poussière.

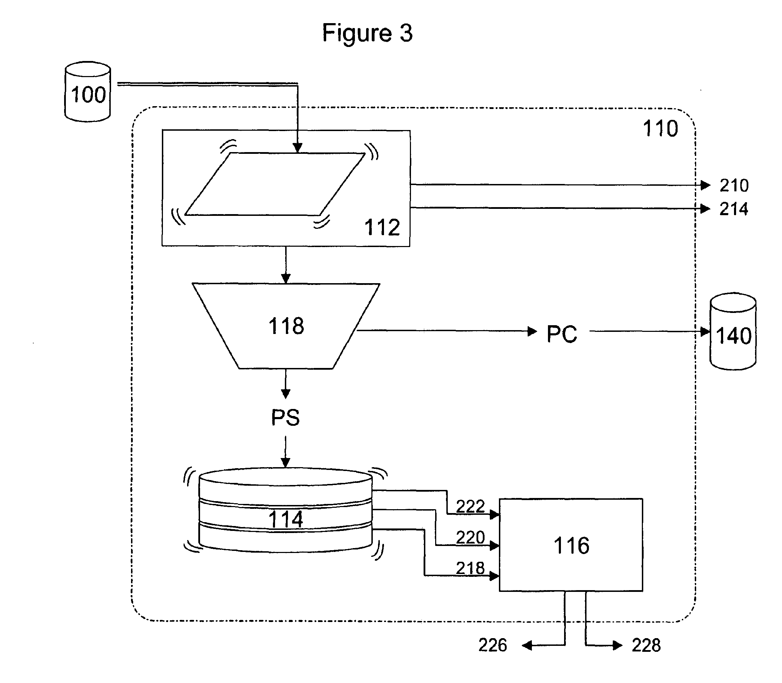

Un exemple de réalisation de cet ensemble de séparation (110) est illustré par la figure 3. Cet ensemble comprend un ensemble de tri densimétrique par table vibrante (112), un ensemble de tri densimétrique en solution aqueuse (118), un tamis vibrant circulaire ou de table de criblage (114) et un ou plusieurs trieur(s) optiques (116).
L'ensemble de tri densimétrique (112) reçoit en entrée le flux de particules broyées et fournit en sortie trois flux : la phase papier/carton broyé (130), la phase poussière et fines particules de plastiques (120), et la phase plastique broyé qui comporte polycarbonate (PC) et polystyrène (PS). Dans ce dessein, il (112) se compose d'un couloir vibrant alimentant en particules broyées, un tamis vibrant fin de granulométrie inférieure à 3 mm, par exemple 1 mm. Le plateau de tamisage est doté d'une toile boulonnée vide de maille de granulométrie 1 mm, et d'un vérin à vis manuel pour régler l'inclinaison du plateau, par exemple à 30° ou 45°. Des moyens de soufflage et de vibration du tamis (moteurs à balourds), non représentés sur les figures, sont également constitutifs du tamis vibrant fin. Des goulottes permettent la récupération des éléments triés : plastique, papier/carton et poussière.
La phase plastique est séparée par une étape de tri densimétrique par voie aqueuse dans un bac de solution saline (118). Un exemple de solution aqueuse, pour la mise en oeuvre de l'invention, est une solution de chlorure de sodium (NaCl) de densité comprise entre 1,05 et 1,10, notamment 1,08. La densité de référence est celle de l'eau, considérée comme étant égale à 1. Il est à noter que le polycarbonate présente une densité d'environ 1,20 alors que le polystyrène a une densité avoisinant 1,03. Ainsi, les morceaux de PS flottent dans la solution aqueuse précédente et les morceaux de PC coulent. L'art antérieur connaît des ensembles de tri densimétrique, par voie saline, adaptés pour la présente invention. Le document WO 03/024603 décrit notamment une cuve de solution saline ainsi que les moyens mis en oeuvre pour récupérer les morceaux flottants (godets) et ceux qui coulent (transporteur à vis sans fin).
Le PS ainsi séparé est constitué très majoritairement de PS cristal transparent (provenant des boîtiers) mais contient également quelques morceaux de PS coloré (socle support de certains CD).
Le PS est alors séparé en trois ensemble de granulométrie différente par le tamis 114. Le tamis vibrant circulaire (114) comprend deux étages de tamisage de granulométrie différente. L'alimentation ayant lieu par le haut du tamis vibrant à deux étages, l'étage supérieur est celui de granulométrie la plus grande, par exemple 8 mm pour un broyage (204) initial de 14 mm, l'étage inférieur de granulométrie la plus faible, par exemple 3 mm. Des moyens moteurs de mise en vibration des tamis de chaque étage font également partie du tamis vibrant circulaire (114). Ainsi, trois flux sont récupérés : les éléments de taille supérieure à 8 mm, ceux dont la taille est comprise entre 3 et 8 mm, et enfin ceux de taille inférieure à 3 mm.
La forme et le nombre d'étages de tamisage ne sont pas limités par le mode de réalisation précédemment décrit. Par exemple, il peut être envisagé d'obtenir cinq flux de tailles différents par l'utilisation de 4 étages de tamisage.
Le ou les trieurs optiques (116) sont de technologie à couplage de charges (CCD). Ils sont paramétrés pour réaliser une détection sur la couleur et/ou la transparence des particules présentées. Des systèmes d'éjection par air sont pilotés par un système informatique d'analyse et de traitement du signal fourni par le dispositif CCD. Lorsque le système identifie un morceau transparent, il commande le système d'éjection du canal correspondant. Dans le mode de réalisation actuel, la table de triage optique (116) comprend au moins trois canaux d'entrée, chacun étant associé aux trois flux tamisés, et au moins deux sorties, l'une pour les particules PS cristal et l'autre pour les morceaux de PS coloré (et éventuellement quelques particules PS cristal qui n'auraient pas été détectées). Le PS coloré s'oppose au PS cristal en ce qu'il n'est pas transparent. Il peut s'agir, par exemple, de boîtiers opaques.

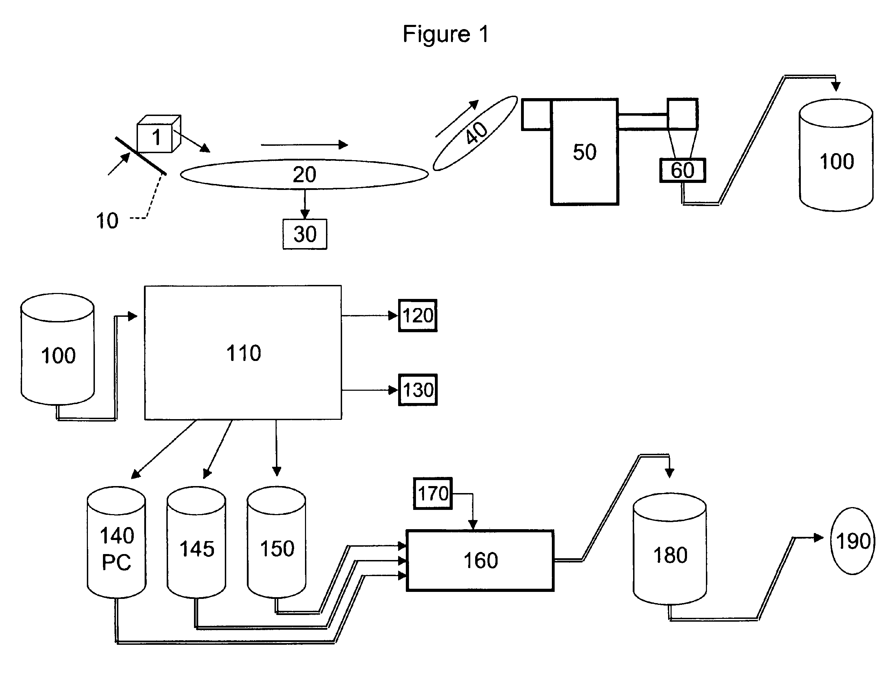

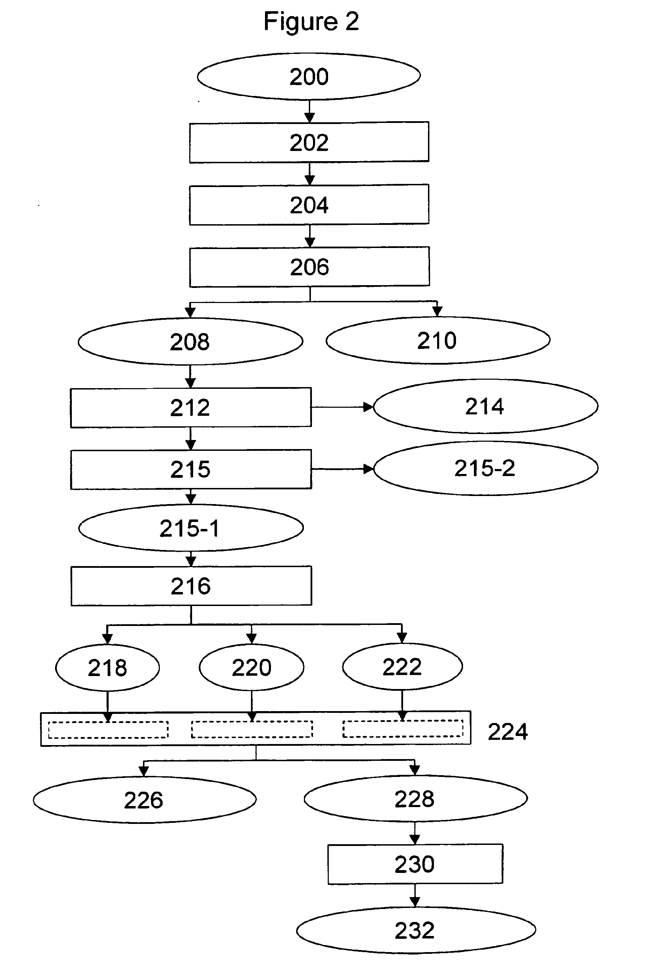

De nouveau en référence aux figures 1 et 2, les éléments broyés alimentant l'ensemble de séparation (110) sont triés par l'ensemble de tri densimétrique (112), c'est-à-dire que les particules broyées sont amenées sur le plateau tamis vibrant par l'intermédiaire du couloir vibrant. La conjonction de la vibration du plateau avec le flux d'air traversant le plateau et l'inclinaison dudit plateau assure la séparation des éléments plastiques (208) des éléments papier/carton (210). L'utilisation de la toile vide de maille d'1 mm permet, en outre, de filtrer (212) les fines de plastiques (poussières) (214). Ce filtrage peut être supprimé en utilisant, par exemple, une surface poreuse à l'air en lieu et place de la toile vide de maille d'1 mm.
Les poussières (214) récupérées sont ensuite mises en sacs grand format (*big bags*) (120), alors que les papiers, films et cartons sont compactés (130) pour fournir un sous-produit à traiter ultérieurement ou à commercialiser en l'état.

La phase plastique en sortie du tri densimétrique ne comprend plus que des éléments plastiques broyés de type PC, PS cristal et PS coloré.
Ce flux plastique alimente ensuite un bac de solution aqueuse saline (118) pour le séparer (215) en deux phases : PS (215-1, morceaux de faible densité flottants) et PC (215-2, morceaux de forte densité qui coulent).
Les éléments 215-1 de PS (mélange de PS cristal et de PS coloré) alimentent ensuite le tamis vibrant circulaire (114) pour le séparer en trois flux de granulométrie différente (216) :
- éléments de taille inférieure à 3 mm (218) ;
- éléments de taille comprise entre 3 et 8 mm (220) ; et
- éléments de taille supérieure à 8 mm (222).
Cette séparation par granulométrie permet d'optimiser la séparation par tri optique (224) des morceaux de plastique PS transparent (228) du PS coloré (226). En effet, l'efficacité du tri optique est d'autant plus grande que la variation de taille des morceaux à séparer est faible.
Les trois flux sont ainsi triés (224) séparément sur la table de tri optique (116) et fournissent d'une part, le PS transparent ou cristal broyé (228) et, d'autre part, un mélange plastique coloré (226). Ce mélange broyé comprend principalement le PS coloré mais également une partie du PS cristal qui a pu être mal trié.

En sortie de l'ensemble de séparation (110), les morceaux de PS cristal broyé (228) sont stockés dans un silo (150) avant l'étape de granulation par extrusion (230). Il est également possible de commercialiser ces morceaux sous forme de broyé ou de micronisé.
Les morceaux de PC et ceux de PS coloré, sont également stockés dans des silos (140, 145). Dans un mode de réalisation, ces morceaux sont conditionnés en sacs de grande capacité (*big bags*) en vue d'une commercialisation. Dans une variante, les morceaux sont extrudés pour former des granulés de PC ou de PS coloré.

### Extrudeuse (160)

Le traitement des plastiques une fois séparés se fait par granulation sur une extrudeuse (160) avec ajout d'additifs et de colorant éventuel (170) selon le produit fini désiré et principalement :
- polystyrène PS transparent ou noir ;
- polycarbonate PC noir.
La granulation du PC se fait avec une filtration en sortie d'extrudeuse de très faible dimension afin de retenir sur le filtre l'aluminium présent sur le CD/DVD.
L'art antérieur propose un grand nombre d'extrudeuses utilisables dans la présente invention.
Les produits obtenus suite à l'extrusion sont des granulés PS cristal (232) qui peuvent être, ensuite, conditionnés en sacs et commercialisés.

### Single et DVD

Dans un mode de réalisation de l'invention, le traitement des CD avec conditionnement sous forme de boîtier est réalisé de façon indépendante de celui des CD *single* et de celui des DVD. Ceci est dû à la composition des plastiques présents dans les CD singles (PC et PET (Polyéthylène Téréphtalate) des emballages (*blisters*)) et dans les DVD (PC et polypropylène)
Les lignes de traitement pour CD *single* et DVD sont constituées des mêmes éléments que celle décrite précédemment. La solution saline de la ligne de traitement est alors adaptée en densité à celle du PET ou du polypropylène (PP) afin que ce dernier coule dans la solution tandis que le PC flotte. Le tableau suivant donne les densités des principales matières plastiques utilisées dans le domaine des disques optiques, et la densité des solutions salines utilisées dans l'invention pour ces types de polymères.

| Type de disque optique | Composition | Densité du polymère | Exemple de densité de la solution saline utilisée (base : eau = 1) |
|---|---|---|---|
| CD avec leur boîtier | PS | 1,03 | 1,05 à 1,10 |
| | PC | 1,20 | |
| CD *single* | PC | 1,20 | 1,22 à 1,28 |
| | PET | 1,31 à 1,34 | |
| DVD | PC | 1,20 | 0,95 à 1,10 |
| | PP | 0,90-0,91 | |

## Revendications

1. Procédé de traitement de déchets hétérogènes composés de disques optiques et de leur conditionnement (200) pour produire des granules de polymères (232) à haut degré de pureté, notamment des granules de polystyrène (PS) cristal, comprenant, successivement, :
- une étape de broyage (204) desdits déchets ;
- une étape de séparation par tri densimétrique des déchets broyés visant à séparer les phases papier/carton, plastique et poussière ;
- une étape de séparation par tri densimétrique en solution saline (215) de ladite phase plastique visant à la séparer en au moins une phase de polymères à haute densité et une à basse densité ;
- une étape d'extrusion (230) en granules à haut degré de pureté d'au moins une desdites phases triées.

2. Procédé de traitement selon la revendication précédente, **caractérisé en ce que** ladite étape de séparation consiste en une étape de tri densimétrique (206) par table vibrante (112) et une étape de tamisage (212) fin visant à récupérer les fines de plastique.

3. Procédé de traitement selon la revendication 2, **caractérisé en ce que** ledit tamisage fin (212) a une granulométrie de 1 mm.

4. Procédé de traitement selon l'une des revendications précédentes, **caractérisé en ce qu'**il comprend, en outre, une étape de tri optique (224) d'au moins une des phases issues de ladite étape de tri par solution saline.

5. Procédé de traitement selon la revendication précédente, **caractérisé en ce que** ladite étape de tri optique (224) est précédée d'une étape de criblage (216) de la phase à trier optiquement en au moins deux flux de granulométrie différente, ladite étape de criblage (216) étant réalisée par un tamis vibrant circulaire (114).

6. Procédé de traitement selon l'une des revendications précédentes, **caractérisé en ce que** ledit broyage (204) a une granulométrie de 14 mm et **en ce que** ledit procédé comprend, en outre, une étape de dépoussiérage successivement à ladite étape de broyage (204).

7. Procédé de traitement selon l'une des revendications précédentes, **caractérisé en ce que** ladite solution saline est une solution de chlorure de sodium (NaCl) de densité comprise entre 1,05 et 1,10.

8. Procédé de traitement selon l'une des revendications précédentes, **caractérisé en ce que** ladite étape d'extrusion (230) comprend une étape d'ajout d'additifs et de colorant éventuel (170).

## Claims

1. A process for the treatment of heterogeneous wastes composed of optical discs and their packaging (200) in order to produce high purity polymer (232) granules, and more particularly crystal polystyrene (PS) granules, including successively:
- a step of crushing (204) said wastes;
- a step of separation through a densimetric sorting of the crushed wastes, aiming at separating the paper/cardboard, plastics/dust phases;
- a step of separation through a densimetric sorting in a saline solution (215) of said plastic phase, aiming at separating it into at least one high density polymer phase and one low density polymer phase.
- a step of extrusion (230) into high purity granules of at least one of said sorted phases.

2. A treatment process according to the preceding claim, **characterized in that** said separation step consists of a step of densimetric sorting (206) on a vibrating table (112) and a step of fine screening (212) aiming at collecting the plastic fines.

3. A treatment process according to claim 2, **characterized in that** said fine screening (212) has a grain size of 1 mm.

4. A treatment process according to one of the preceding claims, **characterized in that** it further comprises a step of optical sorting (224) of at least one of the phases resulting from said step of sorting in a saline solution.

5. A treatment process according to the preceding claim, **characterized in that** said step of optical sorting (224) comes after a step of screening (216) of the phase to be optically sorted into at least two flows having different grain sizes, said screening step (216) being carried out by a circular vibrating screen (114).

6. A treatment process according to one of the preceding claims, **characterized in that** said crushing (204) has a grain size of 14 mm and **in that** said process further includes a dust extraction step, after said crushing step (204).

7. A treatment process according to one of the preceding claims, **characterized in that** said saline solution is a solution of sodium chloride (NaCl) having a density comprised between 1.05 and 1.10.

8. A treatment process according to one of the preceding claims, **characterized in that** said extrusion step (230) comprises a step of adding additives and a coloring agent (170), if so desired.

## Patentansprüche

1. Verfahren für die Verarbeitung ungleichartiger Abfälle aus CD-ROM und ihrer Verpackung (200) für die Erzeugung von Polymerkörnchen (232) mit hohem Reinheitsgrad, insbesondere Körnchen aus Polystyrol (PS) Kristall, das folgende Schritte nacheinander umfaßt:
- Ein Schritt zum Mahlen (204) der besagten Abfälle;
- Ein Schritt zur Trennung durch Sortieren nach Dichtemessung der gemahlenen Abfälle, wobei die Phase Papier/Karton, Kunststoff und Staub getrennt werden sollen;
- Ein Schritt zur Trennung durch Sortieren nach Dichtemessung in Salzlösung (215) der besagten Kunststoffphase, wobei sie in mindestens eine Phase mit hochdichtem Polymer und eine Phase mit niedriger Dichte getrennt werden soll;
- Ein Schritt mit Extrusion (230) in Körnchen mit hohem Reinheitsgrad von mindestens einem der besagten Schritte mit Sortierung.

2. Verfahren für die Verarbeitung nach dem vorstehenden Anspruch, **dadurch gekennzeichnet, daß** der besagte Schritt mit Trennung aus einem Schritt mit Sortierung mit Dichtemessung (206) durch Rütteltisch (112) und aus einem Schritt mit Feinsiebung (212) besteht, damit die Plastikfeinteile gesammelt werden können.

3. Verfahren für die Verarbeitung nach Anspruch 2, **dadurch gekennzeichnet, daß** die besagte Feinsiebung (212) eine Korngröße von 1 mm hat;

4. Verfahren für die Verarbeitung nach einem beliebigen der vorstehenden Ansprüche, **dadurch gekennzeichnet, daß** es ferner einen Schritt mit optischem Sortieren (224) mindestens einer der aus dem besagten Schritt mit Sortieren in Salzlösung hervorgegangenen Phase umfaßt.

5. Verfahren für die Verarbeitung nach vorstehendem Anspruch, **dadurch gekennzeichnet, daß** dem besagten Schritt mit optischem Sortieren (224) ein Schritt mit Korngrößentrennung (216) der Phase mit dem optischen Sortieren in mindestens zwei Flüsse mit unterschiedlicher Korngröße vorausgeht, wobei der besagte Schritt mit Korngrößentrennung (216) mit einem kreisförmigen Schwingsieb (114) realisiert wird.

6. Verfahren für die Verarbeitung nach einem beliebigen der vorstehenden Ansprüche, **dadurch gekennzeichnet, daß** das besagte Mahlen (204) eine Korngröße von 14 mm hat und **dadurch**, daß das besagte Verfahren ferner einen Schritt mit Entstaubung nach dem Schritt mit der Mahlung (204) umfaßt.

7. Verfahren für die Verarbeitung nach einem beliebigen der vorstehenden Ansprüche, **dadurch gekennzeichnet, daß** die besagte Salzlösung eine Lösung aus Natriumchlorid ist (NaCl) mit einer Dichte von zwischen 1,05 und 1,10.

8. Verfahren für die Verarbeitung nach einem beliebigen der vorstehenden Ansprüche, **dadurch gekennzeichnet, daß** der besagte Schritt mit Extrusion (230) einen Schritt mit Hinzufügung von Zusatzstoffen und von eventuellem Farbstoff (170) umfaßt.
